# EUROPÄISCHE PATENTSCHRIFT

(11) **EP 1 095 101 B1**
(45) Veröffentlichungstag und Bekanntmachung des Hinweises auf die Patenterteilung: **11.09.2002**
(21) Anmeldenummer: 99931168.1
(22) Anmeldetag: 24.06.1999
(51) Int. Cl.: C08K 13/02, B29C 47/08

(54) **EINFRIERMASSEN**
FREEZING MATERIALS
MATIERES DE CONGELATION

(30) Priorität: 03.07.1998 DE 19829785
(43) Veröffentlichungstag der Anmeldung: 02.05.2001
(73) Patentinhaber: Cognis Deutschland GmbH & Co. KG, 40589 Düsseldorf (DE)
(72) Erfinder: JAECKEL, Manfred, D-27612 Loxstedt (DE)
(86) Internationale Anmeldenummer: EP9904394
(87) Internationale Veröffentlichungsnummer: WO00001764

(56) Entgegenhaltungen:
- EP-A- 0 363 493
- EP-A- 0 432 585
- WO-A-95/17268
- US-A- 4 954 545

## Beschreibung

### Gebiet der Erfindung

Die Erfindung betrifft die Verwendung von Mischungen von speziellen Homound/oder Co-Polymeren bzw. davon abgeleiteten Pfropfpolymeren, Kreide und Gleit- und/oder Trennmitteln als Einfriermassen bei der formgebenden Verarbeitung von Polyvinylchlorid-haltigen Massen, insbesondere beim Extrudieren und Spritzgießen.

### Stand der Technik

Halogenhaltige Kunststoffe, insbesondere Polyvinylchlorid (PVC) oder daraus hergestellte Formmassen neigen bekanntermaßen zu Abbau- bzw. Zersetzungsreaktionen, wenn sie thermischer Belastung ausgesetzt sind. Derartige thermische Belastungen sind vor allem dann problematisch, wenn sie längere Zeit andauern. Dies ist beispielsweise dann der Fall, wenn Maschinen zur formgebenden Verarbeitung von Polyvinylchlorid-haltigen Mischungen abgestellt werden - beispielsweise über Nacht - und anschließend erneut angefahren werden müssen. Derartige Unterbrechungen des Produktionsverlaufs sind beispielsweise bei Extrudern oder beim Spritzgießen durchaus häufig und üblich. Dabei sind die in den Maschinen noch vorhandenen Massen für längere Zeit starken thermischen Belastungen ausgesetzt. Da übliche Verarbeitungstemperaturen bei der PVC-Verarbeitung im Bereich von etwa 180 bis 200°C liegen und da darüber hinaus die Abkühlung der in der Maschine enthaltenen Massen nur äußerst langsam erfolgt, müssen diese Massen für relativ lange Zeit temperaturstabil sein. Sie müssen darüber hinaus bestimmte Eigenschaften, insbesondere eine geeignete Viskosität und eine ausreichende Klebfreiheit aufweisen, wenn die genannten Maschinen wieder in Betrieb genommen, also angefahren werden.

**JP-A-05/098072** beschreibt Reinigungs-Zusammensetzungen für Maschinen zur formgebenden Verarbeitung von Kunststoffen. Die Zusammensetzungen werden durch Mischen folgender drei Komponenten hergestellt: (1) thermoplastisches Harz, (2) neutrales Salz von Alkylbenzolsulfonsäure und (3) basisches Magnesiumstearat.

**US-A-4838948** beschreibt ein Verfahren zur Reinigung des Equipments zur Verarbeitung von Polymeren. Hierbei wird eine Zusammensetzung eingesetzt, die (1) 92 bis 97,4 % eines Polymeren, (2) 2,4 bis 6,4 % eines milden Abrasivs und (3) 0,2 bis 1,6 % eines sulfonierten Tensids enthält. Komponente (1) kann unter anderem ein Acryl-haltiges Harz sein, Komponente (2) wird ausgewählt aus der Gruppe Calciumcarbonat, - phosphat und - silikat sowie Aluminiumsilikat.

**DD-A-239355** beschreibt ein Verfahren und eine Reinigungsmasse zum schnellen und rationellen Farbwechsel bei der Verarbeitung eingefärbter thermoplastischer Formmassen, insbesondere beim Extrudieren und Spritzgießen. Das Verfahren erfolgt durch Verdrängen der eingefärbten Schmelzrückstände aus dem Extruder oder der Spritzgußmaschine mittels faserverstärkter Thermoplastverbundwerkstoffe. Als vorteilhaft wird herausgestellt, als spezielle Plastformmasse einen faserverstärkten Thermoplastverbundstoff aus Polyamid bzw. Polyolefinen zu verwenden, der bis zu 75 % Glaskurzfasern enthält. Die Plastformmassen können neben diesen faserförmigen Verstärkungsmaterialien bis zu 50 % auch nichtfaserförmige anorganische Zusatzstoffe wie Kreide, Talkum, Kaolin oder dergleichen enthalten.

**DE-C-196 22 579** betrifft Reinigungszusammensetzungen für Kunststoffverarbeitungsausrüstungen, wobei die Zusammensetzungen aus den Komponenten (1) 95 bis 25 % eines hochmolekularen, nicht thermoplastisch verarbeitbaren Polymethylmethacrylat und (2) 5 bis 75 % eines thermoplastisch verarbeitbaren Polymethylmethacrylats besteht. Die genannte Reinigungszusammensetzung liegt als Körnchen/Granulat- oder Granulat-Mischung der Komponenten (1) und (2) vor, die wie ein zu verarbeitender Kunststoff durch die Kunststoffverarbeitungsausrüstung durchgesetzt bzw. durchgepresst wird. Durch Vermischung mit der Reinigungszusammensetzung werden dabei Reste des zuvor verarbeiteten Kunststoffharzes aus der Maschine ausgetragen. Die genannte Reinigungszusammensetzung soll sich insbesondere zur Reinigung von Spritzgußapparaturen und Extrudern eignen, die mit gefärbten oder transparenten Polycarbonaten oder Polymethylmethacrylaten verunreinigt sind.

**WO 95/17268** beschreibt Abrasiv- und Reinigungszusammensetzungen enthaltend (1) überwiegend ein oder mehrere Abrasiv-Pulver, (2) wenigstens ein Harz und (3) wenigstens ein Copolymer eines Olefins und eines (Meth)acrylats. Darüber hinaus kann die Zusammensetzung zusätzlich (4) ein Tensid enthalten. Das Abrasiv (1) kann aus einer Reihe bekannter Verbindungen gewählt werden; eine Möglichkeit dafür ist Calciumcarbonat. Komponente (2) wird ausgewählt aus drei Klassen von Verbindungen. Dabei handelt es sich um Polymere von Dienen, Polymere von Harzsäuren und Copolymere von Olefinen und (Meth)acrylsäureestern. Eine typische Reinigungs-Zusammensetzung wird in Beispiel 1 angegeben: 82 % Calciumcarbonat. 13 % eines Polydiens und 5 % eines Ethylen-Methylacrylat-Copolymeren.

**DE-A-42 02 618** betrifft eine Reinigungszusammensetzung für eine Harzformgebungvorrichtung. welche (1) 50 bis 95 % eines Polyolefinharzes mit einem Schmelzindex von 0,01 bis 0.5, (2) 0,1 bis 15 % eines Acryl-Copolymeren, (3) 2 bis 30 % eines Neutralsalzes von organischer Sulfonsäure und (4) 0,1 bis 10 % basisches Magnesiumcarbonat, Magnesiumhydroxid, Kaliumcarbonat, Zinkcarbonat oder eine Mischung aus zwei oder mehreren Komponenten davon umfaßt. Die Zusammensetzung soll sich für die Reinigung der Formgebungsvorrichtung zur Zeit des Auswechselns der Arten der hochbeanspruchten technischen Kunststoffe bei etwa 400°C eignen.

**EP-A-803338** beschreibt eine Zusammensetzung und ein Verfahren zur Reinigung Kunststoff-verarbeitender Maschinen unter Einsatz eines Materials auf Basis eines thermoplastischen Harzes, das ein substituiertes Pyrrolidon-Lösungsmittel enthält.

### Beschreibung der Erfindung

Die Aufgabe der vorliegenden Erfindung bestand darin, Mischungen bereitzustellen, die sich zur Verwendung als Einfriermassen bei der formgebenden Verarbeitung von Polyvinylchlorid-haltigen Mischungen eignen. Unter "Einfriermassen" sind dabei Massen zu verstehen, die vor dem Abschalten von Maschinen zur formgebenden Verarbeitung von Polyvinylchlorid-haltigen Mischungen einer Massen - eben den Einfriermassen - beschickt werden, die nach dem Abstellen im Inneren der Maschinen verbleiben, wo sie längere Zeit thermischen Belastungen ausgesetzt sind.

Insbesondere sollten sich die erfindungsgemäßen Einfriermischungen durch eine ausgezeichnete Thermostabilität auszeichnen. Insbesondere sollten sie nach längerer thermischer Belastung keine wesentlichen Verfärbungen oder erhöhte Viskositäten aufweisen. Darüber hinaus sollten sie weitgehend klebfrei sein.

Gegenstand der vorliegenden Erfindung ist die Verwendung von Mischungen enthaltend
a) 20 - 45 Gew.-% ein oder mehrere Homo- und/oder Co-Polymere ausgewählt aus der Gruppe der Ester der (Meth)acrylsäure mit 1-wertigen Alkoholen mit 1 - 4 C-Atomen, der Ethylen-Vinylacetat-Copolymere und der Pfropfpolymere auf Basis der genannten Verbindungen
b) 45 - 75 Gew.-% Kreide mit Korngrößen im Bereich von 2 - 150 Mikron und
c) 0,01 - 10 Gew.-% ein oder mehrere Gleit- und/oder Trennmittel mit einer Flüchtigkeit von weniger als 2,0 Gew.-% (Masseverlust bei 2-stündigem Erhitzen in einem offenen Gefäß an der Luft bei 190°C)
als Einfriermassen bei der formgebenden Verarbeitung von Polyvinylchlorid-haltigen Massen. Die bezüglich der Komponenten a) bis c) genannten ProzentAngaben sind zu verstehen als Gewichtsprozent bezogen auf die gesamte Mischung.

Im Hinblick auf die **Komponente a)** werden ein oder mehrere Homo- und/oder Co-Polymere eingesetzt. Es handelt sich dabei um solche Homo- bzw. Co-Polymere, denen als Bausteine Ester der Acrylsäure bzw- Methacrylsäure mit 1-wertigen Alkoholen mit 1 bis 4 C-Atomen zugrundeliegen, ferner um EthylenVinylacetat-Copolymere und ferner um Pfropfpolymeren auf Basis der genannten Verbindungen. Komponente a) wird in einer Menge von 20 - 45 Gew.-% - bezogen auf die gesamte Mischung - eingesetzt. In einer bevorzugten Ausführungsform wird Komponente a) in einer Menge von 25 - 40 Gew.-% und insbesondere von 30 - 35 Gew.-% eingesetzt. Ganz besonders bevorzugt als Komponente a) sind Polymethyl- und Polyethyl-Methacrylate. Das Molekulargewicht der Komponente a) ist an sich nicht kritisch, es hat sich jedoch herausgestellt, daß Verbindungen mit einem mittleren Molekulargewicht (Zahlenmittel; Mn) im Bereich von 800.000 bis 4.000.000 sich ganz besonders eignen. Dabei ist der Bereich von 800.000 bis 2.000.000 ganz besonders bevorzugt.

In einer Ausführungsform setzt man als Komponente a) Co-Polymere ein, die als Bausteine Ester der Acrylsäure bzw. Methacrylsäure mit Methanol und/oder Ethanol zugrundeliegen. In einer anderen Ausführungsform enthält die Komponente a) über die gerade genannten Co-Polymeren hinaus ein oder mehrere Ethylen-Vinylacetat-Copolymere.

Hinsichtlich der **Komponente b)** gilt, daß hier Kreide (Calciumcarbonat) mit Korngrößen im Bereich von 2 - 150 Mikron eingesetzt wird. In einer bevorzugten Ausführungsform weisen mindestens 50 Gew.-% der eingesetzten Kreide - bezogen auf die Gesamtmenge der eingesetzten Kreide - Korngrößen im Bereich von 20 - 100 Mikron auf. Dies bedeutet, daß in der bevorzugten Ausführungsform der überwiegende Teil der Kreide als "grobkörnig" anzusprechen ist. In einer bevorzugten Ausführungsform wird Komponente b) in einer Menge von 55 bis 75 Gew.-% und insbesondere von 65 bis 70 Gew.-% eingesetzt.

Hinsichtlich der **Komponente c)** enthalten die erfindungsgemäß einzusetzenden Einfriermischungen 0,01 - 10 Gew.-% ein oder mehrere Gleit- und/oder Trennmittel mit einer Flüchtigkeit von weniger als 2,0 Gew.-%. Die Flüchtigkeit wird im Rahmen der vorliegenden Erfindung definiert als der Masseverlust der eingesetzten Gleit- und/oder Trennmittel, der bei 2-stündigem Erhitzen der eingesetzten Gleit- und/oder Trennmittel in einem offenen Gefäß an der Luft bei 190°C erfolgt. Der Masseverlust wird in einfacher Weise dadurch ermittelt, daß man bei 20°C eine definierte Menge des zu untersuchenden Gleit- bzw. Trennmittels eingibt, diese Menge anschließend in einem offenem Gefäß an der Luft bei 190°C erhitzt und nach dem Abkühlen auf 20°C das Gewicht des Gleit- bzw. Trennmittels erneut bestimmt. Die Differenz von Ein- und Auswaage ist der auf die Flüchtigkeit der untersuchten Substanz zurückgehende Masseverlust. Er wird in Gew.-% bezogen auf die eingesetzte Substanz angegeben und soll bei den erfindungsgemäß einzusetzenden Verbindungen c) weniger als 2,0 Gew.-% betragen.

Ausdrücklich sei in diesem Zusammenhang festgestellt, daß sich der im Hinblick auf die Flüchtigkeit der Komponente c) angegebene Grenzwert auf sämtliche in der Mischung a) bis c) enthaltenen Gleit- und/oder Trennmittel bezieht. Dies bedeutet, daß in den Fällen, in denen als Komponente c) mehrere Gleit- bzw. Trennmittel eingesetzt werden, nicht jedes einzelne individuelle Gleit- bzw. Trennmittel mittels des angegebenen Tests auf den Masseverlust bei 2-stündigem Erhitzen auf 190°C zu prüfen ist, sondern die Mischung aller eingesetzten Komponenten.

In einer bevorzugten Ausführungsform der vorliegenden Erfindung gilt jedoch, daß beim Einsatz mehrerer Gleit- bzw. Trennmittel als Komponente c) jedes einzelne Gleit- bzw. Trennmittel für sich dem genannte Kriterium hinsichtlich des Masseverlusts beim 1-stündigem Erhitzen auf 190°C genügen muß. Dabei ist jedoch zu berücksichtigen, daß der hier verwendete Begriff der Einzelkomponente nicht in dem Sinne zu verstehen ist, daß etwa bei Produkten auf Basis natürlicher Rohstoffe wie Fettsäureestern, deren Carbonsäure-Bausteine eine bestimmte C-Ketten-Verteilung aufweisen, jedes einzelne chemisch darin enthaltene Individuum dem genannten Test zu unterwerfen wäre, sondern das technische Produkt, also beispielsweise ein C₈₋₂₂-Fettsäurestearylester, als solches.

Komponente c) wird in einer bevorzugten Ausführungsform in einer Menge von 1 - 5 Gew.-% und insbesondere von 2.0 - 3,5 Gew.-% eingesetzt.

Ausdrücklich sei festgestellt, daß als Komponente c) sowohl Gleitmittel, als auch Trennmittel, als auch Gemische von Gleit- und Trennmitteln eingesetzt werden können. Nach dem üblichen Sprachgebrauch des Fachmanns bezeichnet man solche Produkte als Trennmittel, die die Reibungswiderstände überwiegend zwischen Polymerschmelze und Stahloberfläche der bei der formgebenden Verarbeitung eingesetzten Maschine reduzieren; die Reduktion des Reibungswiderstandes hat zur Folge, daß der Massedruck der Schmelze reduziert wird. Demgegenüber wirken Gleitmittel überwiegend in der Polymerschmelze und setzen die internen Reibungskräfte herab, wodurch die Schmelze auch bei hohen Füllstoffgehalten einen guten plastischen Fluß behält, der für die Ausfüllung des formgebenden Werkzeugs von Bedeutung ist.

In einer Ausführungsform der vorliegenden Erfindung werden als Gleit- bzw. Trennmittel c) bei 20°C feste oder flüssige Calciumsalze und/oder Magnesiumsalze und/oder Aluminiumsalze und/oder Zinksalze eingesetzt, die ausgewählt sind aus
c1) Calciumsalzen von gesättigten oder ungesättigten, geradkettigen oder verzweigten Monocarbonsäuren mit 6 bis 36 C-Atomen,
c2) Calciumsalzen der unsubstituierten oder mit C₁₋₄-Alkylresten substituierten Benzoesäure.
c3) Zinksalzen von gesättigten oder ungesättigten, geradkettigen oder verzweigten Monocarbonsäuren mit 6 bis 36 C-Atomen,
c4) Magnesiumsalzen von gesättigten oder ungesättigten, geradkettigen oder verzweigten Monocarbonsäuren mit 6 bis 36 C-Atomen,
c5) Magnesiumsalzen von gesättigten oder ungesättigten Dicarbonsäuren mit 6 bis 10 C-Atomen,
c6) Aluminiumsalzen von gesättigten oder ungesättigten, geradkettigen oder verzweigten Monocarbonsäuren mit 6 bis 36 C-Atomen

Für die vorstehend genannten Calcium-, Magnesium- und Aluminiumsalze gilt, daß sie sowohl allein als auch in Mischung als Komponente c) eingesetzt werden könnten.

Weitere Gleit- bzw. Trennmittel, die alleine oder in Kombination miteinander als Komponente c) eingesetzt werden können, sind die hierfür einschlägig aus dem Stand der Technik bekannten Substanzen. Vorzugsweise kommen folgende Verbindungstypen in Frage: Kohlenwasserstoffwachse, die im Temperaturbereich von 70 bis 130°C schmelzen, oxidierte Polyethylenwachse, freie Fettsäuren mit 8 bis 22 C-Atomen und deren verzweigtkettige Isomere, beispielsweise Stearinsäure oder auch Hydroxystearinsäure, α-Olefine, Wachsester, d. h. Ester aus längerkettigen Monocarbonsäuren und Monoalkoholen, primäre und sekundäre, gesättigte und ungesättigte höhere Alkohole mit vorzugsweise 16 bis 44 C-Atomen im Molekül, Ethylendiamindistearat, Montansäureester von Diolen, beispielsweise von Ethandiol, 1,3-Butandiol und Glycerin, Mischungen derartiger Montansäureester mit unveresterten Montansäuren, Partialester aus Fettsäuren mit 8 bis 22 C-Atomen und Polyolen mit 2 bis 6 C-Atomen und 2 bis 6 Hydroxylgruppen. die pro Molekül im Durchschnitt mindestens eine freie Polyol-Hydroxylgruppe enthalten. Einsetzbar sind weiterhin die in der **DE-C-19 07 768** beschriebenen Mischester mit Hydroxyl- bzw. Säurezahlen im Bereich von 0 bis 6 aus aliphatischen. cycloaliphatischen oder aromatschen Dicarbonsäuren mit 2 bis 22 C-Atomen im Molekül, aliphatischen Polyolen mit 2 bis 6 Hydroxylgruppen im Molekül und aliphatischen Monocarbonsäuren mit 12 bis 30 C-Atomen im Molekül. Beispiele hierfür sind Mischester aus Maleinsäure-Pentaerythrit-Behensäure, Mischester aus Adipinsäure-Pentaerythrit-Ölsäure und Mischester aus Adipinsäure-Pentaerythrit-Stearinsäure. Derartige Gleit- oder Trennmittel können im Rahmen der vorliegenden Erfindung sowohl einzeln, als auch in Kombination miteinander, sowie auch in Kombination mit dem oben genannte Calcium-, Magnesium- oder Aluminiumsalzen eingesetzt werden.

Es kann gewünscht sein. neben den Komponenten a) bis c) zusätzlich weitere Komponenten einzusetzen. Beispiele hierfür sind: anorganische Zusatzstoffe wie Talkum, Kaolin und dergleichen, kationische Schichtverbindungen, beispielsweise Hydrotalcite oder modifiziete Hydrotalcite. Zeolithe.

Die erfindungsgemäß einzusetzenden Einfriermassen werden in der Regel wie folgt eingesetzt: Im normalen Fahrbetrieb der Maschinen zur formgebenden Verarbeitung von PVC-haltigen Mischungen werden diese Mischungen den Maschinen, z. B. Extrudern, kontinuierlich zugeführt. Soll nun die Maschine abgestellt bzw. der Produktionsverlauf unterbrochen werden, so führt man kein PVC-haltiges Material mehr zu, sondern die erfindungsgemäß einzusetztende Einfriermasse. Sobald das Innere der Maschine überwiegend und vorzugsweise vollständig mit der erfindungsgemäß einzusetzenden Einfriermasse gefüllt ist, die zuvor vorhandene PVC-haltige Masse also überwiegend oder vollständig verdrängt ist, wird die Maschine abgestellt. Die Maschine kann nun für längere Zeit abgeschaltet bleiben. Ob die Wiederinbetriebnahme beispielsweise nach einer Stunde, nach 6 Stunden, nach 24 Stunden oder nach mehreren Tagen oder nach Wochen erfolgt, ist prinzipiell ohne Belang. Der wesentliche Vorteil beim Einsatz der erfindungsgemäßen Einfriermassen kommt jedoch besonders dann zur Geltung, wenn die Einfriermassen längere Zeit hohen Temperaturen im Innern der Maschine ausgesetzt sind. Dies ist beispielsweise regelmäßig dann der Fall, wenn die Maschine über Nacht abgestellt wird und die Temperatur im Inneren der Maschine und damit auch die Temperatur der darin befindlichen Einfriermasse nur langsam abklingt. Bei der erneuten Inbetriebnahme der Maschine treten keinerlei Probleme auf. Insbesondere ist bei dieser Inbetriebnahme nicht mit wesentlichen Viskositätsanstiegen zu rechnen. Zum Herausfahren der in der Maschine befindlichen erfindungsgemäßen Einfriermassen kann man entweder direkt PVC-haltige Mischungen einsetzen, es kann jedoch auch gewünscht sein, die in der Maschine befindlichen Einfriermassen mittels frischer, noch unverbrauchter Einfriermassen zu verdrängen und erst nach einer gewissen Zeit auf die zu verarbeitenden PVC-haltigen Mischungen überzugehen.

Hinsichtlich der formgebenden Maschinen, in denen die erfindungsgemäß einzusetzenden Einfriermischungen zum Einsatz kommen, bestehen an sich keinerlei Einschränkungen. Von besonderer Bedeutung sind jedoch Extruder, insbesondere die verschiedensten handelsüblichen Ein- und Doppelschneckenextruder, sowie Spritzgußmaschinen.

### Beispiele

| **Rezeptur 1 (erfindungsgemäß)** | | |
|---|---|---|
| **Komponente** | **Anteil (Gew.-%)** | **Bemerkung** |
| Paraloid K 120 N ER^{a)} | 28,0 | Poly(meth)acrylat |
| Calcifin 20 ^{b)} | 17,0 | 1 - 10-Mikron-Kreide |
| Calcilit 40 G ^{b)} | 52,5 | 10 - 100-Mikron-Kreide |
| Loxiol G32 ^{c)} | 1,5 | Gleitmittel |
| Zn-Stearat ^{c)} | 1,0 | Gleitmittel |

| | | |
|---|---|---|
| ^{a)} Fa. Rohm & Haas: | | |
| ^{b)} Fa. Alpha; | | |
| ^{c)} Fa. Henkel KGaA | | |

### Beispiel 1

Der vorliegende Test dient dazu, die Hitzestabilität der erfindungsgemäßen Massen in einem Härtetest zu demonstrieren. Hierzu wurde die Masse gemäß der oben genannten Rezeptur 1 auf einem in der PVC-verarbeitenden Industrie üblichen Doppelschnecken-Extruder (Battenfeld-Maschine BEX 2-65-22 mit Celuca-Profilwerkzeug) nach mehrstündigem Produktionsbetrieb eingesetzt und 24 Stunden im Werkzeug bei eingeschalteter Heizung bei einer Betriebstemperatur von 185°C thermisch belastet. Am nächsten Tag wurde diese thermisch stark belastete Masse unter Zuhilfenahme von nicht-belasteter Masse gemäß Rezeptur 1 völlig problemlos aus der Maschine herausgefahren. Dabei zeigte sich, daß einerseits die thermisch belastete Masse praktisch keine Verfärbung aufwies, andererseits sich ohne wesentlichen Druckanstieg aus dem Extruder herausfahren ließ; letzteres ist ein Indiz dafür, daß während der Phase der thermischen Belastung praktisch keine Prozesse stattfanden, die zu einem Viskositätsanstieg der Masse hätten führen können. Besonders bemerkenswert ist, daß die Masse nach 24-stündiger thermischer Belastung farblich nahezu unverändert war. Dies bedeutet eine erhebliche Verbesserung gegenüber herkömmlichen handelsüblichen Einfriermassen, deren Thermostabilität in der Regel im Bereich zwischen 2 und 6 Stunden liegt.

### Beispiel 2

Das vorliegende Beispiel demonstriert den normalen Einfrierbetrieb. Dabei wurde die Maschine zunächst wie üblich betrieben (Profilextrusion von PVC), anschließend wurde die Masse gemäß Rezeptur 1 unter Verdrängung des PVC in den Extruder hineingefahren, anschließend wurden alle Heizzonen abgeschaltet und schließlich wurde nach 24 Stunden der Extruder wieder angefahren, wobei beim Anfahren zunächst die Einfriermasse gemäß Rezeptur 1 eingesetzt und dann auf PVC umgeschaltet wurde. Es zeigte sich, daß wie in Beispiel 1 keine wesentliche Verfärbung der thermisch belasteten Masse erfolgt war und daß die thermisch belastete Masse leicht aus der Maschine herausgefahren werden konnte. Die rheologischen Anforderungen wie sie in der PVC-verarbeitenden Industrie an eine Einfriermasse gestellt werden, waren in ausgezeichneter Weise erfüllt.

## Patentansprüche

1. Verwendung von Mischungen enthaltend
a) 20 - 45 Gew.-% ein oder mehrere Homo- und/oder Co-Polymere ausgewählt aus der Gruppe der Ester der (Meth)acrylsäure mit 1-wertigen Alkoholen mit 1 - 4 C-Atomen, der Ethylen-Vinylacetat-Copolymere und der Pfropfpolymere auf Basis der genannten Verbindungen
b) 45 - 75 Gew.-% Kreide mit Korngrößen im Bereich von 2 - 150 Mikron und
c) 0,01 - 10 Gew.-% ein oder mehrere Gleit- und/oder Trennmittel mit einer Flüchtigkeit von weniger als 2,0 Gew.-% (Masseverlust bei 2-stündigem Erhitzen
in einem offenen Gefäß an der Luft bei 190°C)
als Einfriermassen bei der formgebenden Verarbeitung von Polyvinylchlorid-haltigen Massen.

2. Verwendung nach Anspruch 1, wobei man die formgebende Verarbeitung in einem Extruder durchführt.

3. Verwendung nach Anspruch 1 oder 2, wobei die Einfriermassen während der Standzeit der formgebenden Maschine für Zeitintervalle im Bereich von 1 bis 24 Stunden Temperaturen im Bereich von 180 bis 200°C ausgesetzt sind.

4. Verwendung nach einem der Ansprüche 1 bis 3, wobei mindestens 50 Gew.-% der eingesetzten Kreide b) - bezogen auf die Gesamtmenge der eingesetzten Kreide - Korngrößen im Bereich von 20 - 100 Mikron aufweisen.

## Claims

1. The use of mixtures containing
a) 20 to 45% by weight of one or more homopolymers and/or copolymers selected from the group of esters of (meth)acrylic acid with monohydric alcohols containing 1 to 4 carbon atoms, ethylene/vinyl acetate copolymers and graft polymers based on the compounds mentioned,
b) 45 to 75% by weight of chalk with particle sizes of 2 to 150 microns and
c) 0.01 to 10% by weight of one or more lubricants and/or release agents with a volatility of less than 0.2% by weight (weight loss after heating in air at 190°C for 2 hours in an open vessel),
as freezable compounds in the molding of polyvinyl chloride molding compositions.

2. The use claimed in claim 1, **characterized in that** the molding process is carried out in an extruder.

3. The use claimed in claim 1 or 2, **characterized in that** the freezable compounds are exposed to temperatures of 180 to 200°C for periods of 1 to 24 hours during the stoppage time of the molding machine.

4. The use claimed in any of claims 1 to 3, **characterized in that** at least 50% by weight of the chalk b) used - based on the total quantity of chalk used - has particle sizes in the range from 20 to 100 microns.

## Revendications

1. Utilisation de mélanges contenant :
a1) de 20 à 45 % en poids d'un ou plusieurs homo- et/ou copolymères choisis dans le groupe des esters de l'acide méthacrylique avec des alcools mono-fonctionnels ayant de 1 à 4 atomes de carbone, des copolymères éthylène-acétate de vinyle et des polymères greffés à base des composés mentionnés,
d) de 45 à 75 % en poids de craie ayant des tailles de grains dans la zone de 2 à 150 microns, et,
c) de 0,01 à 10 % en poids d'un ou plusieurs agents de glissement ou de séparation ayant une volatilité de moins de 2 % en poids (perte de masse lors d'un chauffage de 2 heures dans un récipient ouvert, à l'air à 190°C).
en tant que masses de solidification dans le façonnage de masses contenant du chlorure de polyvinyle.

2. Utilisation de mélanges selon la revendication 1,
dans laquelle
on effectue le façonnage dans une extrudeuse.

3. Utilisation de mélanges selon la revendication 1 ou la revendication 2,
dans laquelle
pendant le temps d'arrêt des machines de modelage les masses de solidification sont exposées pendant des intervalles de temps dans la zone de 1 à 24 heures, à des températures dans la zone de 180 à 200°C.

4. Utilisation de mélanges selon l'une des revendications 1 à 3,
dans laquelle
au moins 50 % en poids de la craie b) mise en oeuvre - rapporté à la quantité totale de la craie mise en oeuvre - possèdent des tailles de grains dans la zone de 20 à 100 microns.
